# FASCICULE DE BREVET EUROPEEN

(11) **EP 2 719 920 B1**
(45) Date de publication et mention de la délivrance du brevet: **08.04.2015**
(21) Numéro de dépôt: 13185492.9
(22) Date de dépôt: 23.09.2013
(51) Int. Cl.: F16F 15/14

(54) **Double volant amortisseur équipé d'un dispositif d'amortissement pendulaire**
Zweimassenschwunggrad mit Fliehkraftpendel
Dual mass flywheel including a pendulum damper

(30) Priorité: 11.10.2012 FR 1259703
(43) Date de publication de la demande: 16.04.2014
(73) Titulaire: Valeo Embrayages, 80009 Amiens Cedex 2 (FR)
(72) Inventeur: Rost, Jonathan, 80000 AMIENS (FR); Tondellier, Clément, 80520 WOINCOURT (FR)
(74) Mandataire: Tran, Chi-Hai

(56) Documents cités:
- DE-A1-102004 011 830
- DE-A1-102009 042 804
- DE-A1-102010 034 812
- DE-A1-102010 049 556

## Description

### DOMAINE TECHNIQUE DE L'INVENTION

L'invention concerne un double volant amortisseur équipé d'un dispositif d'amortissement pendulaire.

### ÉTAT DE LA TECHNIQUE

Un double volant amortisseur comporte typiquement un volant primaire destiné à être couplé à un arbre moteur et définissant un logement annulaire et un ensemble secondaire comportant un voile et un volant secondaire, ou masse secondaire, fixé audit voile. Afin de limiter la propagation des vibrations de torsion dans la transmission, des organes élastiques sont logés dans le logement annulaire du volant primaire et montés entre des moyens d'appui du volant primaire et du voile annulaire et agissent ainsi à l'encontre de la rotation du volant primaire par rapport au voile annulaire.

Dans l'art antérieur, il existe de nombreux types de double volant amortisseur équipés d'un dispositif d'amortissement pendulaire.

La demande de brevet allemand DE 196 54 894 divulgue un tel double volant amortisseur, dans lequel les masselottes du dispositif d'amortissement pendulaires sont logées dans un boîtier annulaire fixé sur le voile du double volant amortisseur. Le boîtier annulaire présente toutefois un encombrement axial relativement important qui, pour un encombrement du volant amortisseur donné, diminue le volume alloué au débattement des masselottes, et, par conséquent, diminue la masse des masselottes et l'efficacité du dispositif d'amortissement pendulaire.

Il est également décrit, dans la demande de brevet WO 2011147632, des masselottes qui sont montées entre deux éléments annulaires de support. Les deux éléments annulaires de support sont, d'une part, solidarisés en rotation à des pattes de sollicitation des organes élastiques et, d'autre part, fixés à la masse secondaire. Toutefois, un tel double volant amortisseur est relativement complexe à fabriquer puisqu'il nécessite de nombreuses pièces différentes pour, d'une part, assurer le passage du couple entre les organes élastiques et la masse primaire et, d'autre part, supporter les moyens d'amortissement pendulaire. En outre, l'espace disponible pour le logement des masselottes est également limité du fait de la présence de deux éléments annulaires de support.

Enfin, il est divulgué, dans la demande de brevet FR 2 826 079, un double volant amortisseur dans lequel les masselottes sont constitués d'une paire de masses latérales disposées de part et d'autre du voile annulaire et solidarisées l'une à l'autre par des rivets passant au travers d'orifices du voile. Cette conception permet d'optimiser la masse des masselottes. Toutefois, en contrepartie, le montage des masselottes sur le voile est complexe puisqu'il nécessite notamment un alignement parfait entre les masses latérales.

Le document DE 10 2009 042804 A1 est considéré comme étant l'état de l'art le plus proche et décrit toutes les caractéristiques du préambule de la revendication 1.

Les solutions de l'art antérieur ne sont donc pas pleinement satisfaisantes.

### OBJET DE L'INVENTION

L'invention vise à remédier à ces problèmes en proposant un double volant amortisseur dont la réalisation soit simple et la masses des masselottes optimisée.

A cet effet, et selon un premier aspect, l'invention propose un double volant amortisseur pour un véhicule automobile, comportant :
- un volant primaire destiné à être couplé à un arbre moteur et définissant un logement annulaire ;
- un ensemble secondaire comportant un voile présentant un corps annulaire, et une masse secondaire, fixée audit voile ;
- des organes élastiques logés dans le logement annulaire du volant primaire, montés entre des moyens d'appui du volant primaire et du voile et agissant à l'encontre de la rotation du volant primaire par rapport au voile ;
- un dispositif d'amortissement pendulaire comprenant au moins deux masselottes pendulaires circonférentiellement réparties sur l'ensemble secondaire et des moyens de guidage desdites masselottes pendulaires par rapport à l'ensemble secondaire ; lesdits moyens de guidage comportant, pour chaque masselotte, une paire d'éléments de roulement, chacun desdits éléments de roulement étant apte à rouler sur une première piste solidaire de ladite masselotte et sur une seconde piste solidaire de l'ensemble secondaire ;
ledit double volant amortisseur étant remarquable en ce que les premières et secondes pistes de roulement s'étendent radialement en vis-à-vis et en ce que les secondes pistes de roulement sont portées par des moyens de support s'étendant axialement entre le corps annulaire du voile et la masse secondaire.

Ainsi, la conception selon l'invention présente un excellent compromis entre facilité de fabrication et optimisation du volume disponible au débattement des masselottes puisque, d'une part, elle ne nécessite pas d'opération d'alignement entre des masses qui seraient disposées de part et d'autre du voile et, puisque, d'autre part, les moyens de support du dispositif pendulaire ne diminuent pas la dimension axiale du volume alloué au débattement des masselottes.

Les moyens de support s'étendent au travers d'orifices formés dans les masselottes. Ainsi, les moyens de support permettent également de former une butée radiale de support des masselottes lorsqu'elles ne sont plus soumises à la force centrifuge.

Avantageusement, le volant primaire comporte une masse d'inertie présentant un rebord cylindrique et un couvercle annulaire radial fixé sur l'extrémité libre du rebord cylindrique de façon à délimiter ledit logement annulaire ; la masse secondaire présente une portion s'étendant axialement entre deux portions radiales ; et les masselottes pendulaires s'étendent radialement entre le couvercle annulaire et ladite portion s'étendant axialement. Cet agencement permet d'optimiser l'encombrement du double volant amortisseur et le volume alloué au débattement des masselottes pendulaires.

Selon une réalisation avantageuse, la seconde piste de roulement est bordée par des épaulements permettant de guider axialement les éléments de roulement par rapport aux moyens de support. De préférence, la première piste de roulement est bordée par des épaulements permettant de guider axialement les éléments de roulement par rapport aux masselottes pendulaires. Ainsi, grâce au maintien axial des éléments de roulement par rapport aux moyens de support, d'une part, et par rapport aux masselottes d'autre part, le maintien axial des masselottes par rapport aux moyens de support est assuré et les surfaces latérales des masselottes ne peuvent ainsi pas être amenées à frotter contre la masse secondaire ou contre le voile.

Avantageusement, les masselottes pendulaires sont formées d'une partie centrale et de deux parties latérales fixées de part et d'autre de ladite partie centrale, lesdites parties centrale et latérales présentant des orifices de passage des moyens de support et les orifices des parties latérales présentant une dimension radiale inférieure à la dimension radiale des orifices de la partie centrale de sorte à former lesdits épaulements de guidage axial des éléments de roulement. Une telle réalisation des masselottes pendulaires est avantageuse en ce qu'elle permet de réaliser facilement les épaulements de maintien axial des éléments de roulement. En outre, une réalisation des masselottes en trois parties est avantageuse en ce que la surface des masselottes qui doit être réalisée par usinage de précision afin d'obtenir des pistes de roulement satisfaisante est limitée.

Selon un mode de réalisation, le voile présente des pattes pliées, s'étendant axialement vers la masse secondaire et formant les moyens de support portant les secondes pistes de roulement. Cette réalisation ne nécessite pas d'élément supplémentaire pour réaliser la fonction de support des masselottes pendulaires.

Selon un second mode de réalisation, les moyens de support portant les secondes pistes de roulement sont formés par des éléments rapportés fixés sur le voile et/ou sur la masse secondaire.

Enfin, selon un troisième mode de réalisation, la masse secondaire présente des saillies axiales réalisées en une seule pièce qui forment les moyens de support portant les secondes pistes de roulement.

Enfin, selon d'autre caractéristiques de l'invention, la masse secondaire présente des gorges ou des pions de positionnement coopérant avec l'extrémité libre des pattes pliées ou des éléments rapportés fixés au voile ou le voile présente des gorges ou des pions de positionnement coopérant avec l'extrémité libre des éléments rapportés fixés à la masse secondaire ou des saillies axiales formées dans la masse secondaire. Les gorges ou pions de positionnement permettent de protéger les pattes pliées, éléments rapportés ou saillies axiales contre des éventuelles déformations dues à la force centrifuge.

### BRÈVE DESCRIPTION DES FIGURES

D'autres objets et avantages de l'invention apparaîtront au cours de la description qui suit, faite en référence aux dessins annexés, dans lesquels :
- la figure 1 est une vue éclatée en perspective d'un double volant amortisseur selon l'invention ;
- la figure 2, 3 et 4 sont des demi-vues, en coupe, d'un double volant amortisseur selon trois variantes de réalisation d'un premier mode de réalisation de l'invention ;
- la figure 5 est une vue en perspective arrière de l'ensemble secondaire d'un double volant amortisseur selon le premier mode de réalisation ;
- les figures 6a et 6b sont des demi-vues, d'un double volant amortisseur selon un second mode de réalisation, respectivement en coupe passant par les moyens de fixation des moyens de support du dispositif pendulaire et en coupe passant par les éléments de roulement ;
- la figure 7 est une vue en perspective arrière de l'ensemble secondaire du double volant amortisseur des figures 6a et 6b ;
- les figures 8a, 8b et 9a, 9b sont des demi-vues d'un double volant amortisseur respectivement selon une seconde et une troisième variantes du second mode de réalisation ;
- les figures 10 et 11 sont des demi-vues en coupe d'un double volant amortisseur, selon une quatrième et une cinquième variantes du second mode de réalisation ;
- la figure 12 est une vue en perspective éclatée de l'ensemble secondaire d'un double volant amortisseur selon un troisième mode de réalisation ;
- les figures 13, 14 et 15 sont des demi-vues, en coupe, de trois variantes du troisième mode de réalisation de la figure 12.

### EXEMPLE DE RÉALISATION

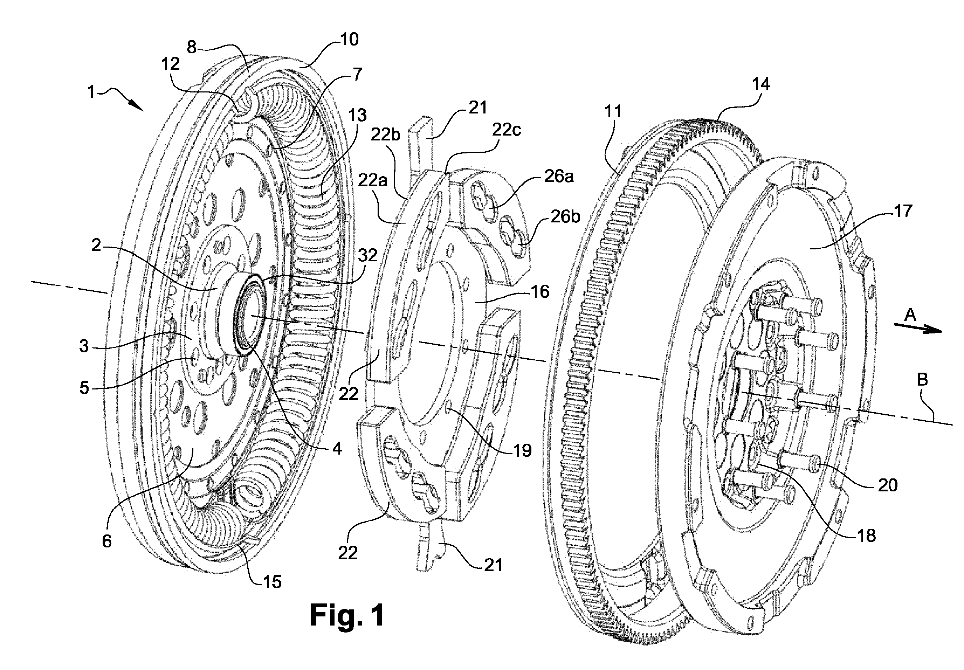

Afin de faciliter la compréhension de la description et des revendications, on utilisera, à titre non limitatif, une orientation axiale dirigée d'arrière en avant qui est indiquée par la flèche « A » de la figure 1 et qui est parallèle à l'axe de rotation « B » du double volant amortisseur, et une orientation radiale dirigée de l'intérieur vers l'extérieur depuis l'axe de rotation B du double volant amortisseur. On utilisera aussi une orientation circonférentielle dirigée orthogonalement à la direction radiale.

Un double volant amortisseur pour un véhicule automobile est représenté sur la figure 1. Il comporte un élément d'entrée de couple comprenant un volant primaire 1 destiné à être couplé directement à un arbre moteur, tel par exemple qu'un vilebrequin d'un moteur thermique, non représenté.

Le volant primaire 1 comporte un moyeu central 2, qu'on appellera dans la suite de la description moyeu primaire 2, comprenant une partie annulaire radiale 3 dont la périphérie radialement interne est prolongée vers l'avant par une partie annulaire cylindrique 4. Des orifices 5 sont ménagés dans la partie annulaire radiale 3 et sont régulièrement répartis sur toute la circonférence. Des vis de fixation, non représentées, engagées dans les orifices 5, permettent la fixation du moyeu primaire 2 à l'extrémité du vilebrequin du moteur. L'extrémité du vilebrequin ou nez de vilebrequin comporte une zone cylindrique de guidage, engagée à l'intérieur du moyeu primaire, de manière à assurer le centrage du moyeu primaire 2 sur le nez du vilebrequin.

Les vis précitées viennent également s'engager dans des orifices ménagés à la périphérie radialement interne d'une tôle annulaire flexible 6, déformable élastiquement et axialement. Des orifices sont en outre ménagés à la périphérie radialement externe de la tôle flexible 6 et sont destinés à sa fixation par l'intermédiaire de rivets 7 à une masse d'inertie annulaire 8. Plus particulièrement, la masse d'inertie 8 comporte une partie 9 s'étendant radialement, dont le bord périphérique externe est prolongé vers l'avant par un rebord cylindrique 10.

L'ensemble formé par la masse d'inertie 8, la tôle flexible 6 et le moyeu primaire 2 peut, en variante, être formé d'une seule pièce.

Le volant primaire comporte également un couvercle annulaire radial 11 qui est fixé sur l'extrémité libre du rebord cylindrique 10, de façon à délimiter, avec la masse primaire 8, un espace 12 de logement d'organes élastiques 13 d'un amortisseur de torsion. Le couvercle annulaire radial 11 porte une couronne de démarreur 14.

Les organes élastiques 13 à action circonférentielle, agencés dans le logement 12 du volant primaire 1, sont composés de ressorts hélicoïdaux courbes, c'est-à-dire s'étendant circonférentiellement en arc de cercle. Des goulottes de guidage 15 peuvent être interposées radialement entre les organes élastiques 13 et le fond du logement 12 périphérique. Les organes élastiques 13 sont montés entre des moyens d'appui du volant primaire 1 et de l'ensemble secondaire et agissent ainsi à l'encontre de la rotation du volant primaire 1 par rapport audit ensemble secondaire.

L'ensemble secondaire est composé d'un voile 16 et d'une masse secondaire 17 ou volant secondaire. Dans les modes de réalisation représentés, les double volant amortisseur sont desrtiné à être associé à un embrayage simple à sec. Dans ce cas, , la face radiale avant de la masse d'inertie secondaire 17 est destiné à former une surface d'appui d'un disque de friction (non représenté), lié en rotation avec un arbre d'entrée de la boîte de vitesses, et sollicité par un plateau de pression lorsque l'embrayage est en position embrayée. Dans d'autres modes de réalisation non représentés, le double volant amortisseur peut également être associé à un double embrayage dans l'huile ; dans ce cas, la masse secondaire ne forme pas nécessairement uns surface d'appui d'un disque de friction.

Le voile 16 et la masse secondaire 17 présentent à proximité de leur bord interne des orifices 18, 19 permettant le passage de rivets 20 pour la fixation de la masse secondaire 17 au voile annulaire 16.

Le voile 16 présente un corps annulaire qui est prolongé radialement vers l'extérieur par des pattes d'appui 21 coopérant avec les extrémités des organes élastiques 13 de telle sorte que le couple soit transmis entre le volant primaire 1 et le voile 16 en amortissant les acyclismes.

La masse secondaire 17 est centrée et guidée en rotation sur la partie annulaire cylindrique 4 du moyeu primaire 2 par l'intermédiaire d'un palier 32.

Le double volant amortisseur comporte également un dispositif d'amortissement pendulaire porté par l'ensemble secondaire et s'étendant axialement entre le corps annulaire du voile 16 et la masse secondaire 17.

Le dispositif d'amortissement pendulaire est composé d'une pluralité de masselottes 22, quatre dans les modes de réalisation représentés, régulièrement réparties. Le dispositif pendulaire est du type bifilaire. Ainsi, chacune des masselottes 22 est guidée par une paire d'éléments de roulement 23, tels que des rouleaux cylindriques, qui, d'une part, coopère avec une première piste 24 de roulement solidaire de ladite masselotte 22, et, d'autre part, coopère avec une seconde piste 25 de roulement solidaire de l'ensemble secondaire.

La géométrie des pistes 24, 25 de roulement est agencée de manière à ce que, sous l'effet de la force centrifuge, la fréquence d'oscillation de chacune des masselottes soit proportionnelle à la vitesse de rotation de l'arbre moteur, ce multiple pouvant par exemple prendre une valeur proche du rang de l'harmonique prépondérant des vibrations responsables des fortes irrégularités de rotation.

Les première 24 et seconde 25 pistes de roulement s'étendent radialement en vis-à-vis. En d'autres termes, les premières 24 et secondes 25 pistes de roulement sont situées dans un même plan orthogonal à l'axe de rotation du double volant amortisseur. Ainsi, en fonctionnement, l'élément de roulement 23 n'est sollicité qu'en compression

Selon l'invention, les secondes pistes de roulement 25 sont portées par des moyens de support qui s'étendent axialement entre le corps annulaire du voile 16 et la masse secondaire 17 et traversent des orifices 26a, 26b formées dans les masselottes 22.

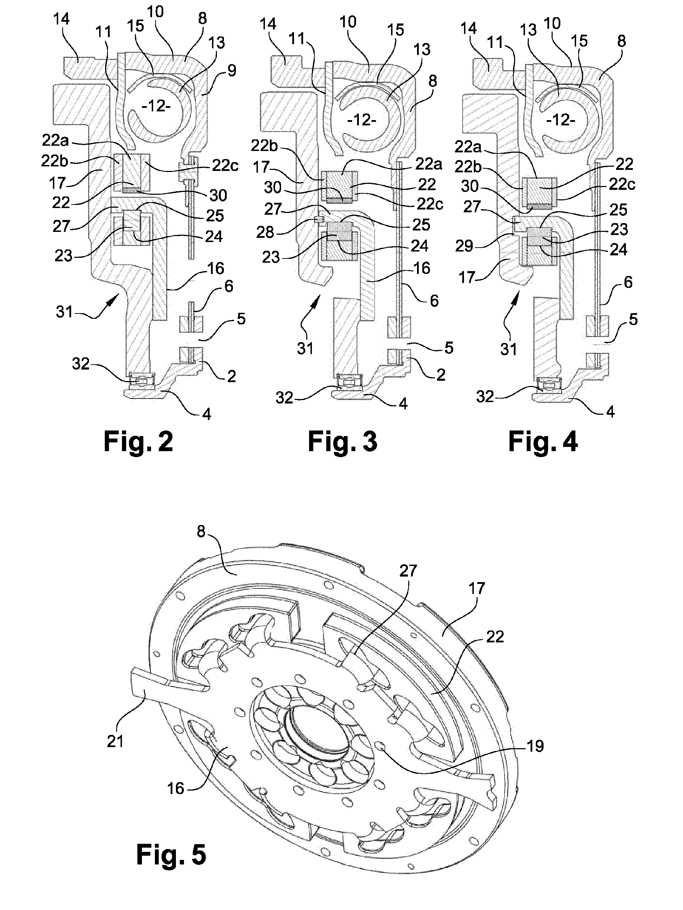

Dans le premier mode de réalisation de l'invention, représenté sur les figures 2 à 5, les secondes pistes 25 de roulement sont portées par des pattes pliées 27 du voile 16 qui s'étendent axialement, c'est-à-dire selon l'axe B, vers la masse secondaire 17.

Selon les variantes des figures 3 et 4, les extrémités libres des pattes pliées 27 du voile 16 sont radialement maintenues par rapport à la masse secondaire 17. Pour ce faire, selon la variante de la figures 3, des pions de positionnement 28 ou des rivets, non représentés, permettent de maintenir radialement l'extrémité libre des pattes pliées 27 du voile par rapport à la masse secondaire 17. Selon la variante de la figure 4, la masse secondaire 17 présente une ou plusieurs gorges 29 recevant les extrémités libres des pattes pliées 27.

Les moyens de support de la seconde piste de roulement 25 - les pattes pliées 27 dans le mode de réalisation des figures 2 à 5 - présentent des épaulements bordant la seconde piste de roulement 25 et permettant de guider axialement les éléments de roulement 23 par rapport à la seconde piste de roulement 25.

De manière analogue, les premières pistes de roulement 24 sont bordées par des épaulements permettant de guider axialement les éléments de roulement 23 par rapport aux masselottes 22.

Les masselottes 22 sont formées de trois parties 22a, 22b, 22c de même forme générale en arc : une partie centrale 22a et deux parties latérales 22b, 22c fixées de part et d'autre de ladite partie centrale 22a. Les différentes parties 22a, 22b et 22c sont, par exemple, fixées les unes aux autres par l'intermédiaire de rivets, non représentés.

Les parties centrale 22a et latérales 22b, 22c présentant des orifices de passage des moyens de support. La première piste de roulement 24 est formée sur un bord interne de l'orifice de la partie centrale. Les orifices des parties latérales 22b présentent une dimension radiale inférieure à la dimension radiale des orifices de la partie centrale 22a de sorte à former les épaulements de guidage axial des éléments de roulement 23. En outre, la dimension radiale des éléments de roulement 23 est avantageusement inférieure à la dimension radiale des orifices des parties latérales 22b, 22c de telle sorte que les éléments de roulement 23 soient montés de manière imperdable dans les masselottes 22.

Les masselottes 22 sont équipées des moyens d'amortissement élastique permettant de réduire les impacts lors des contacts, de façon à limiter le bruit en fonctionnement, notamment lorsque les masselottes 22 ne sont plus soumises à la force centrifuge et/ou lorsque les masselottes 22 arrivent en fin de course. Les moyens d'amortissement sont ici formés d'une bande en élastomère 30 s'étendant de manière continue le long du bord radialement externe des orifices de la partie centrale 22a des masselottes 22.

Les bandes en élastomère 30 peuvent être fixées sur les masselottes 22 par surmoulage, collage ou coopération de forme (queue d'arronde, par exemple). De préférence, le bord radialement externe de la partie centrale 22a est situé radialement à l'extérieur par rapport aux bords radialement externes des parties latérales 22b, de manière à bien emprisonner la bande 30 entre les parties latérales 22b après montage.

La masse secondaire 17 présente une portion 31 s'étendant axialement entre une portion radiale interne centrée sur le moyeu primaire 2 par l'intermédiaire d'un palier 32 et une portion radiale externe. Les masselottes 22 s'étendent radialement entre le couvercle 11 et la portion 31 de la masse secondaire 17 de sorte à optimiser l'encombrement du double volant amortisseur.

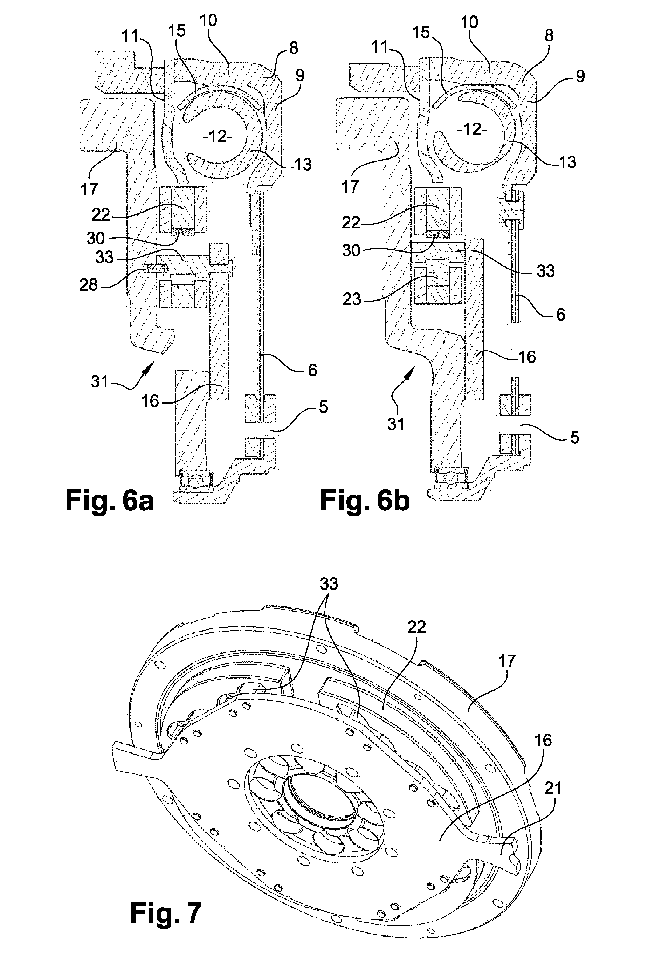

Les figures 6a, 6b, 7, 8a, 8b, 9a, 9b, 10 et 11 illustrent des variantes d'un second mode de réalisation de l'invention. Ce mode de réalisation diffère du mode de réalisation décrit précédemment en ce que les moyens de support sont formés par des éléments rapportés 33 fixés sur le voile 16 et/ou sur la masse secondaire 17.

Dans la variante de réalisation illustrée sur les figures 6a, 6b et 7, l'élément rapporté 33 est, d'une part, riveté sur le voile 16 et, d'autre part, maintenu radialement sur la masse secondaire 17par des pions de positionnement 28.

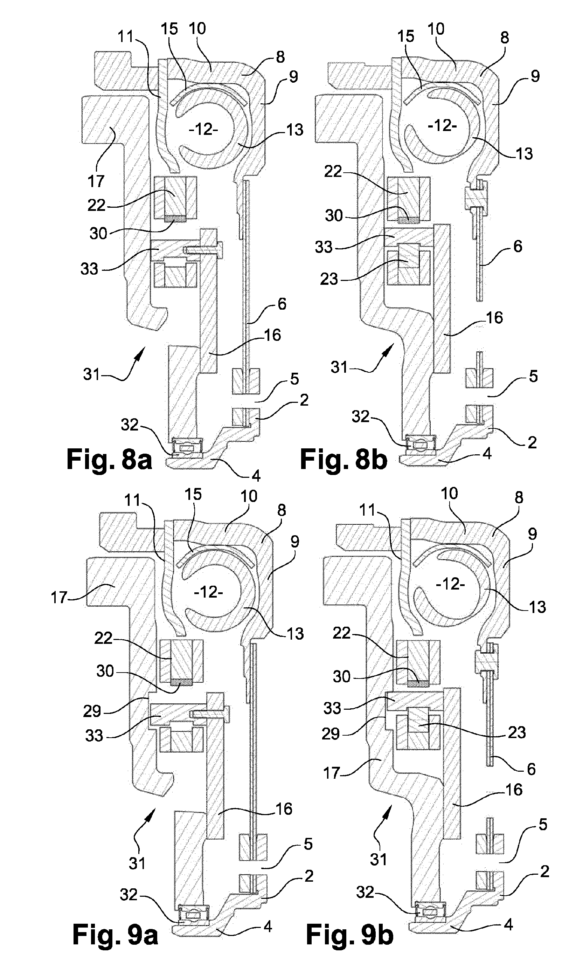

Dans la variante de réalisation illustrée sur les figures 8a et 8b, l'élément rapporté 33 portant la seconde piste de roulement 25 n'est fixé que sur le voile annulaire 16, par rivetage par exemple. De manière alternative, l'élément rapporté 33 peut n'être fixé que sur la masse secondaire 17.

Dans la variante de réalisation des figures 9a et 9b, l'extrémité libre de l'élément rapporté 33 est reçu dans une gorge 29, formée dans la masse secondaire 17, dont le bord radialement interne permet de maintenir radialement l'extrémité libre de l'élément rapporté 33 afin de limiter la déformation dudit élément rapporté 33 lorsqu'il est soumis à l'effet centrifuge.

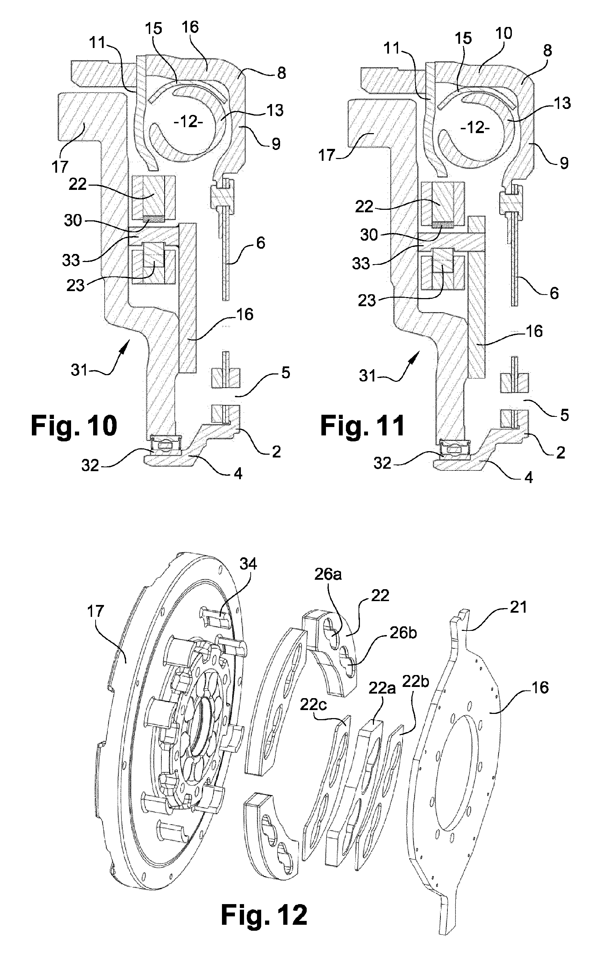

Dans la variante de réalisation de la figure 10, l'élément rapporté 33 est soudé sur le voile 16. Dans la variante de la figure 11, l'élément rapporté 33 est monté dans des orifices formées dans le voile annulaire 16.

Les figures 12 à 15 illustrent des variantes d'un troisième mode de réalisation de l'invention. Ce mode de réalisation diffère des modes de réalisation décrit précédemment en ce que la masse secondaire 17 présente des saillies axiales 34 réalisées en une seule pièce qui forment les moyens de support portant les secondes pistes de roulement 24.

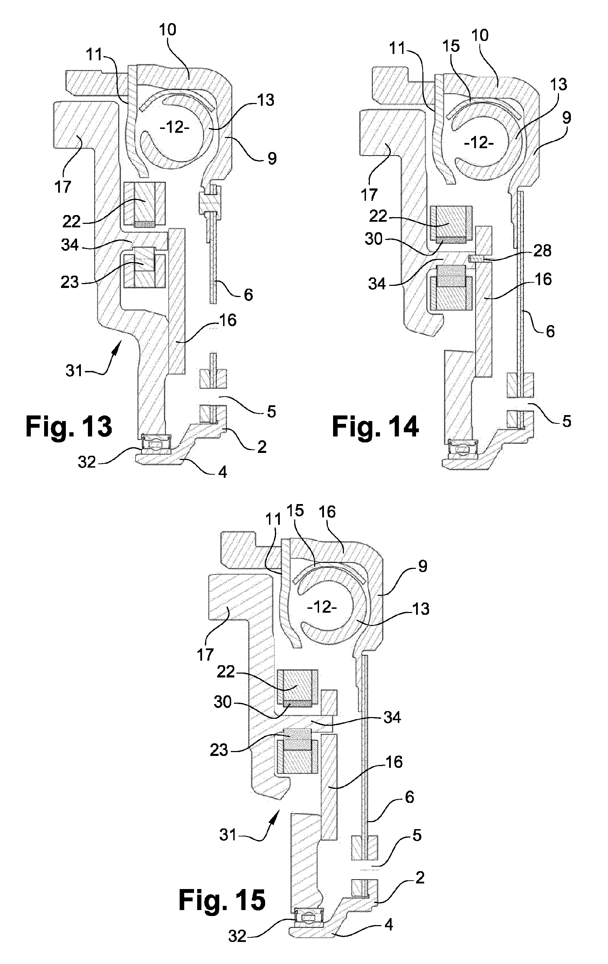

Dans le mode de réalisation de la figure 14, l'extrémité libre de la saillie axiale 34 est maintenue radialement au voile 16 via un pion de positionnement 28.

Sur la figure 15, l'extrémité libre de la saillie axiale 34 est reçue dans un orifice formé dans le voile annulaire.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Double volant amortisseur pour un véhicule automobile, comportant :
- un volant primaire (1) destiné à être couplé à un arbre moteur et définissant un logement annulaire (12) ;
- un ensemble secondaire comportant un voile (16) présentant un corps annulaire et une masse secondaire (17), fixée audit voile ;
- des organes élastiques (13) logés dans le logement annulaire (12) du volant primaire (1), montés entre des moyens d'appui du volant primaire (1) et du voile (16) et agissant à l'encontre de la rotation du volant primaire(1) par rapport au voile (16) ;
- un dispositif d'amortissement pendulaire comprenant au moins deux masselottes pendulaires (22) circonférentiellement réparties sur l'ensemble secondaire et des moyens de guidage desdites masselottes pendulaires par rapport à l'ensemble secondaire ; lesdits moyens de guidage comportant, pour chaque masselotte (22), une paire d'éléments de roulement, (23) chacun desdits éléments de roulement (24) étant apte à rouler sur une première piste (24) solidaire de ladite masselotte (22) et sur une seconde piste (25) solidaire de l'ensemble secondaire ;
les premières (24) et secondes (25) pistes de roulement s'étendant radialement en vis-à-vis et les secondes pistes (25) de roulement étant portées par des moyens de support (27, 33, 34) s'étendant axialement entre le corps annulaire du voile (16) et la masse secondaire (17), ledit double volant amortisseur étant caractérisé en ce les moyens de support (27, 33, 34) s'étendent au travers d'orifices (26a, 26b) formés dans les masselottes (22).

2. Double volant amortisseur selon la revendication 1, dans lequel le volant primaire (1) comporte une masse d'inertie (8) présentant un rebord cylindrique (10) et un couvercle annulaire radial (11) fixé sur l'extrémité libre du rebord cylindrique (10) de façon à délimiter ledit logement annulaire (12), dans lequel la masse secondaire (17) présente une portion (31) s'étendant axialement entre deux portions radiales, et dans lequel les masselottes pendulaires (22) s'étendent radialement entre le couvercle annulaire (11) et ladite portion (31) s'étendant axialement.

3. Double volant amortisseur selon l'une des revendications 1 à 2, dans laquelle la seconde piste de roulement (24) est bordée par des épaulements permettant de guider axialement les éléments de roulement (23) par rapport aux moyens de support (27, 33, 34).

4. Double volant amortisseur selon l'une quelconque des revendications 1 à 3, dans laquelle la première piste de roulement (25) est bordée par des épaulements permettant de guider axialement les éléments de roulement (23) par rapport aux masselottes pendulaires (22).

5. Double volant amortisseur selon la revendication 4, dans lequel les masselottes pendulaires (22) sont formées d'une partie centrale (22a) et de deux parties latérales (22b, 22c) fixées de part et d'autre de ladite partie centrale (22a), lesdites parties centrale (22a) et latérales (22b, 22c) présentant des orifices (26a, 26b) de passage des moyens de support (27, 33, 34), les orifices des parties latérales (22b, 22c) présentant une dimension radiale inférieure à la dimension radiale des orifices de la partie centrale (22a) de sorte à former lesdits épaulements de guidage axial des éléments de roulement (23).

6. Double volant amortisseur selon l'une quelconque des revendications 1 à 5, dans lequel le voile (16) présente des pattes pliées (27), s'étendant axialement vers la masse secondaire (17) et formant les moyens de support portant les secondes pistes (25) de roulement.

7. Double volant amortisseur selon l'une quelconque des revendications 1 à 5, dans lequel les moyens de support portant les secondes pistes (25) de roulement sont formés par des éléments rapportés (30) fixés sur le voile (16) et/ou sur la masse secondaire (17).

8. Double volant amortisseur selon l'une quelconque des revendications 1 à 5, dans lequel la masse secondaire (17) présente des saillies axiales (34) réalisées en une seule pièce qui forment les moyens de support portant les secondes pistes (25) de roulement.

9. Double volant amortisseur selon l'une quelconque des revendications 6 et 7, dans lequel la masse secondaire (17) présente des gorges (29) ou des pions de positionnement (28) coopérant avec l'extrémité libre des pattes pliées (27) ou des éléments rapportés (33) fixés au voile (16) de sorte à protéger les pattes pliées (27) ou les éléments rapportés (33) contre les déformations liées à la force centrifuge.

10. Double volant amortisseur selon l'une quelconque des revendications 7 et 8, dans lequel le voile (16) présente des gorges (29) ou des pions de positionnement (28) coopérant avec l'extrémité libre des éléments rapportés (33) fixés à la masse secondaire (17) ou des saillies axiales (34) formées dans la masse secondaire (17) de sorte à protéger les pattes pliées contre les déformations liées à la force centrifuge.

## Patentansprüche

1. Doppeltes Dämpfungsschwungrad für ein Kraftfahrzeug, das Folgendes aufweist:
- ein Hauptschwungrad (1), das dazu bestimmt ist, mit einer Antriebswelle verbunden zu werden und eine ringförmige Aufnahme (12) bildet,
- eine Sekundäreinheit, die eine Platte (16) aufweist, die einen ringförmigen Körper und eine Sekundärmasse (17), die an der Platte befestigt ist, aufweist,
- elastische Elemente (13), die in der ringförmigen Aufnahme (12) des Hauptschwungrads (1) aufgenommen sind, die zwischen Stützmitteln des Hauptschwungrads (1) und der Platte (16) installiert sind und gegen die Drehung des Hauptschwungrads (1) in Bezug auf die Platte (16) wirken,
- eine Fliehkraftdämpfvorrichtung, die mindestens zwei Fliehgewichte (22), die umfänglich auf der Sekundäreinheit verteilt sind, und Führungsmittel der Fliehkraftmassen in Bezug auf die Sekundäreinheit aufweist, wobei die Führungsmittel für jedes Fliehgewicht (22) ein Paar Rollelemente (23) aufweisen, wobei jedes der Rollelemente (23) geeignet ist, um auf einer ersten Bahn (24), die fest mit dem Fliehgewicht (22) verbunden ist, und auf einer zweiten Bahn (25), die fest mit der Sekundäreinheit verbunden ist, zu laufen,
wobei sich die ersten (24) und die zweiten (25) Laufbahnen radial in Gegenüberlage erstrecken, und die zweiten Laufbahnen (25) von Stützmitteln (27, 33, 34) getragen sind, die sich axial zwischen dem ringförmigen Körper der Platte (16) und der Sekundärmasse (17) erstrecken, wobei das doppelte Dämpfungsschwungrad **dadurch gekennzeichnet** ist, dass sich die Stützmittel (27, 33, 34) durch Öffnungen (26a, 26b), die in den Fliehgewichten (22) ausgebildet sind, erstrecken.

2. Doppeltes Dämpfungsschwungrad nach Anspruch 1, bei dem das Hauptschwungrad (1) eine Trägheitsmasse (8) aufweist, die einen zylindrischen Wulst (10) und einen ringförmigen radialen Deckel (11) aufweist, der auf dem freien Ende des zylindrischen Wulsts (10) befestigt ist, um die ringförmige Aufnahme (12) abzugrenzen, in der die Sekundärmasse (17) einen Abschnitt (31) aufweist, der sich axial zwischen zwei radialen Abschnitten erstreckt, und in dem sich die Fliehgewichte (22) radial zwischen dem ringförmigen Deckel (11) und dem sich axial erstreckenden Abschnitt (31) erstrecken.

3. Doppeltes Dämpfungsschwungrad nach einem der Ansprüche 1 bis 2, bei dem die zweite Laufbahn (24) von Ansätzen abgegrenzt ist, die es erlauben, die Rollelemente (23) in Bezug auf die Stützelemente (27, 33, 34) axial zu führen.

4. Doppeltes Dämpfungsschwungrad nach einem der Ansprüche 1 bis 3, bei dem die erste Laufbahn (25) von Ansätzen abgegrenzt ist, die es erlauben, die Rollelemente (23) in Bezug auf die Fliehgewichte (22) axial zu führen.

5. Doppeltes Dämpfungsschwungrad nach Anspruch 4, bei dem die Fliehgewichte (22) aus einem zentralen Teil (22a) und aus zwei seitlichen Teilen (22b, 22c), die zu beiden Seiten des zentralen Teils (22a) befestigt sind, ausgebildet sind, wobei der zentrale Teil (22a) und die seitlichen Teile (22b, 22c) Durchgangsöffnungen (26a, 26b) der Stützmittel (27, 33, 34) aufweisen, wobei die Öffnungen der seitlichen Teile (22b, 22c) ein radiales Maß aufweisen, das kleiner ist als das radiale Maß der Öffnungen des zentralen Teils (22a), so dass die Führungsansätze axial zu den Rollelementen (23) ausgebildet sind.

6. Doppeltes Dämpfungsschwungrad nach einem der Ansprüche 1 bis 5, bei dem die Platte (16) gefaltete Pratzen (27) aufweist, die sich axial zu der Sekundärmasse (17) erstrecken und die Stützmittel bilden, die die zweiten Laufbahnen (25) tragen.

7. Doppeltes Dämpfungsschwungrad nach einem der Ansprüche 1 bis 5, bei dem die Stützmittel, die die zweiten Laufbahnen (25) tragen, aus angebauten Elementen (30) ausgebildet sind, die auf der Platte (16) und/oder auf der Sekundärmasse (17) befestigt sind.

8. Doppeltes Dämpfungsschwungrad nach einem der Ansprüche 1 bis 5, bei dem die Sekundärmasse (17) axiale Vorsprünge (34) aufweist, die aus einem einzigen Teil gebildet sind, die die Stützmittel bilden, die die zweiten Laufbahnen (25) tragen.

9. Doppeltes Dämpfungsschwungrad nach einem der Ansprüche 6 und 7, bei dem die Sekundärmasse (17) Hohlkehlen (29) oder Positionierungsklötze (28) aufweist, die mit dem freien Ende der gefalteten Pratzen (27) oder den angebauten Elementen (33), die an der Platte (16) befestigt sind, zusammenwirken, so dass die gefalteten Pratzen (27) oder die angebauten Elemente (33) vor Verformungen in Zusammenhang mit der Zentrifugalkraft geschützt sind.

10. Doppeltes Dämpfungsschwungrad nach einem der Ansprüche 7 und 8, bei dem die Platte (16) Hohlkehlen (29) oder Positionierungsklötze (28) aufweist, die mit dem freien Ende der angebauten Elemente (33), die an der Sekundärmasse (17) befestigt sind, oder axialen Vorsprüngen (34), die in der Sekundärmasse (17) ausgebildet sind, zusammenwirken, um die gefalteten Pratzen vor Verformungen in Zusammenhang mit der Zentrifugalkraft zu schützen.

## Claims

1. Dual mass flywheel for a motor vehicle, comprising:
- a primary flywheel (1) intended to be coupled to a drive shaft and defining an annular housing (12);
- a secondary assembly comprising a plate (16) having an annular body and a secondary mass (17) which is fixed to the said plate;
- elastic members (13) housed in the annular housing (12) of the primary flywheel (1), mounted between means for bearing the primary flywheel (1) and the plate (16) and acting counter to the rotation of the primary flywheel (1) with respect to the plate (16);
- a pendulum damping device comprising at least two pendulum weights (22) circumferentially distributed over the secondary assembly and means for guiding the said pendulum weights with respect to the secondary assembly; the said guide means comprising, for each weight (22), a pair of rolling bearing elements (23), each of the said rolling bearing elements (23) being able to roll on a first raceway (24) secured to the said weight (22) and on a second raceway (25) secured to the secondary assembly;
the first (24) and second (25) raceways extending radially opposite one another and the second raceways (25) being borne by support means (27, 33, 34) extending axially between the annular body of the plate (16) and the secondary mass (17), the said dual mass flywheel being **characterized in that** the support means (27, 33, 34) extend through orifices (26a, 26b) formed in the weights (22).

2. Dual mass flywheel according to Claim 1, in which the primary flywheel (1) comprises an inertial mass (8) having a cylindrical rim (10) and a radial annular cover (11) fixed to the free end of the cylindrical rim (10) so as to delimit the said annular housing (12), in which the secondary mass (17) has a portion (31) extending axially between two radial portions, and in which the pendulum weights (32) extend radially between the annular cover (11) and the said axially extending portion (31).

3. Dual mass flywheel according to either one of Claims 1 and 2, in which the second raceway (24) is bordered by shoulders making it possible to axially guide the rolling bearing elements (23) with respect to the support means (27, 33, 34).

4. Dual mass flywheel according to any one of Claims 1 to 3, in which the first raceway (25) is bordered by shoulders making it possible to axially guide the rolling bearing elements (23) with respect to the pendulum weights (22).

5. Dual mass flywheel according to Claim 4, in which the pendulum weights (22) are formed by a central part (22a) and by two lateral parts (22b, 22c) fixed on either side of the said central part (22a), the said central (22a) and lateral (22b, 22c) parts having orifices (26a, 26b) for the passage of the support means (27, 33, 34), the orifices of the lateral parts (22b, 22c) having a radial dimension which is smaller than the radial dimension of the orifices of the central part (22a) so as to form the said shoulders for axially guiding the rolling bearing elements (23).

6. Dual mass flywheel according to any one of Claims 1 to 5, in which the plate (16) has folded lugs (27) extending axially towards the secondary mass (17) and forming the support means bearing the second raceways (25).

7. Dual mass flywheel according to any one of Claims 1 to 5, in which the support means bearing the second raceways (25) are formed by add-on elements (30) fixed to the plate (16) and/or to the secondary mass (17).

8. Dual mass flywheel according to any one of Claims 1 to 5, in which the secondary mass (17) has axial projections (34) made in a single piece which form the support means bearing the second raceways (25).

9. Dual mass flywheel according to either one of Claims 6 and 7, in which the secondary mass (17) has positioning grooves (29) or pins (28) cooperating with the free end of the folded lugs (27) or the add-on elements (33) fixed to the plate (16) so as to protect the folded lugs (27) or the add-on elements (33) against the deformations associated with the centrifugal force.

10. Dual mass flywheel according to either one of Claims 7 and 8, in which the plate (16) has positioning grooves (29) or pins (28) cooperating with the free end of the add-on elements (33) fixed to the secondary mass (17) or axial projections (34) formed in the secondary mass (17) so as to protect the folded lugs against the deformations associated with the centrifugal force.
